Europäisches Patentamt

European Patent Office

Office européen des brevets

(11) Veröffentlichungsnummer: **0 048 833**
**B1**

## EUROPÄISCHE PATENTSCHRIFT

(45) Veröffentlichungstag der Patentschrift:
27.08.86

(51) Int. Cl.⁴: **B 23 C 5/24**

(21) Anmeldenummer: **81106795.8**

(22) Anmeldetag: **31.08.81**

(54) **Fräswerkzeug.**

(30) Priorität: **27.09.80 DE 3036527**

(43) Veröffentlichungstag der Anmeldung:
**07.04.82 Patentblatt 82/14**

(45) Bekanntmachung des Hinweises auf die Patenterteilung:
**27.08.86 Patentblatt 86/35**

(84) Benannte Vertragsstaaten:
**FR GB IT SE**

(56) Entgegenhaltungen:
**DE - A - 2 163 842**
**DE - C - 674 112**
**FR - A - 1 362 071**
**FR - A - 1 401 790**
**FR - A - 1 425 175**
**FR - A - 2 210 125**
**US - A - 3 121 939**
**US - A - 3 162 929**
**US - A - 3 214 825**

(73) Patentinhaber: **Santrade Ltd., Alpenquai 12 P.O. Box 321, CH-6002 Luzern (CH)**

(72) Erfinder: **Lindlar, Wilhelm, Reussstrasse 7, D-5000 Köln 80 (DE)**
Erfinder: **Wermeister, Günter, Schmiedestrasse 36, D-4030 Ratingen 1 (DE)**

(74) Vertreter: **Wangemann, Horst, Dipl.-Ing., Stresemannstrasse 28, D-4000 Düsseldorf (DE)**

**Beschreibung**

Die Erfindung bezieht sich auf ein Fräswerkzeug der im Oberbegriff des Hauptanspruches genannten Art.

Durch die den Gattungsbegriff des Hauptanspruches bestimmende US-A-3 121 939 ist ein Werkzeug für einen Horizontalfräser, eine Hobelmaschine oder Stossmaschine bekannt, dessen Schneidmesserhalter durch zwei parallele Schrauben radial verstellbar und um eine senkrecht zur Messerhalterebene gelegene Achse an dem Werkzeugkörper kippbar ist, wobei eine Axialverstellung durch eine dritte, rechtwinklig zu den beiden Radialschrauben angeordnete Schraube möglich ist.

In der FR-A-1 362 071 ist ein Fräswerkzeug beschrieben, dessen Schneidmesserhalter mit Hilfe eines Exzenters axial verstellbar und durch eine zusätzliche, in der Längsmittelachse des Werkzeugs gelegene Klemmschraube an dem Werkzeugkörper gehalten ist.

Diesen bekannten Fräswerkzeugen gegenüber besteht die Aufgabe, die drei Bewegungen des Schneidmesserhalters, d.h. das axiale und radiale Verstellen sowie das Kippen um die senkrecht zur Halterebene gelegene Achse mit konstruktiv einfachen und vor allem platzsparenden Mitteln zu erreichen, wobei eine hohe Präzision der Einstellung geschaffen werden soll. Desweiteren soll die Einstellage des Schneidmesserhalters während der Arbeit mit dem Werkzeug gewährleistet sein.

Zur Lösung dieser Aufgabe sind bei einem gattungsgemässen Fräswerkzeug die Merkmale des kennzeichnenden Teils des Hauptanspruches vorgesehen. – Die Merkmale der Unteransprüche dienen der weiteren Ausgestaltung und Verbesserung der Merkmale des Hauptanspruches.

Das erfindungsgemässe Fräswerkzeug bietet den Vorteil, dass die axiale Verstellvorrichtung zwischen den parallelen Stellschrauben Platz findet und insofern der Schneidhalter kurz ausgebildet werden kann. Es bedarf keines zusätzlichen Platzes für die Sicherung des Exzenters. Vor allem aber ist eine genaue Einstellung der Kipplage des Schneidmesserhalters durch die beiden vor und hinter dem Exzenter gelegenen Stellschrauben möglich, d.h. der Schneidmesserhalter kann aufgrund des Übermasses des Exzenterkopfes gegenüber dem ihn aufnehmenden Einschnitt gekippt werden. – Durch die weitere vorteilhafte Ausbildung des Exzenterkopfes als Kegelstumpf wird das Schneidmesser radial gegen Fliehkräfte zusätzlich gesichert. Durch den federbelasteten Sicherungsstift wird der Exzenter zwar in seiner Lage gehalten, erlaubt aber dennoch ein leichtes axiales Gleiten der Stellschrauben auf ihren Stützflächen wie auch ein Kippen des Schneidmesserhalters bei unter Federdruck stehendem Sicherungsstift möglich ist.

Auf der Zeichnung ist ein Ausführungsbeispiel des Schneidwerkzeuges nach der Erfindung dargestellt und zwar zeigt

Fig. 1 eine Draufsicht in radialer Richtung auf einen Abschnitt des Werkzeuges mit der den Schneidmesserhalter sowie die Klemmstücke aufnehmenden Ausnehmung,

Fig. 2 einen Schnitt nach der Linie II–II der Fig. 1,

Fig. 3 eine Ansicht des Fräswerkzeugabschnittes in Richtung des Pfeiles III der Fig. 1,

Fig. 4 den Schneidmesserhalter in Seitenansicht,

Fig. 5 denselben Halter in der Ansicht gegen seine Unterseite in Richtung des Pfeiles V in Figur 4,

Fig. 6 eine Draufsicht auf den Schneidmesserhalter in Richtung des Pfeiles VI in Figur 4,

Fig. 7 das Eingreifen des Exzenters in die entsprechende Ausnehmung des Schneidmesserhalters,

Fig. 8 die stirnseitige Ansicht des Schneidmesserhalters mit der, das Schneidmesser ausnehmenden Ausnehmung,

Fig. 9 die, den Exzenter in dem Fräswerkzeug haltende Schraube mit Feder- und Haltestift,

Fig. 10 ein zur Anwendung gelangendes Schneidmesser in Draufsicht, von hinten und von der Seite,

Fig. 11 einen Schnitt durch eins der beiden Klemmstücke,

Fig. 12 eine Ansicht in radialer Richtung des Werkzeugabschnittes gemäss Fig. 1 mit dem eingesetzten Schneidmesserhalter sowie den beiden Klemmstücken,

Fig. 13 das in einem Durchsichtprojektor erkennbare Bild einer Schneidmesserecke mit den Möglichkeiten der Verstellung des Schneidmessers in axialer und radialer Richtung gegenüber dem Fräswerkzeug sowie in einer geneigten Lage gegenüber der Radialen des Fräswerkzeuges,

Fig. 14 einen Schnitt durch den Schneidmesserhalter in seinen verschiedenen einstellbaren Lagen und

Fig. 15 den Exzenter mit seinem pilzartigen Kopf in der entsprechenden Ausnehmung des Schneidmesserhalters.

Das zylindrische Werkzeug 1 trägt in gleichmässigem winkelmässigem Abstand an seinem Umfang Ausnehmungen 2, von denen jeweils in der Zeichnung nur immer eine dargestellt ist. Die Ausnehmung verläuft gegenüber der Längsachse L des Werkzeuges, bzw. einer Parallelen hierzu geneigt; sie wird von dem Boden 3 und den beiden Seitenwänden 4, 5 begrenzt, von denen die Seitenwand 4 in die Abschrägung 6 übergeht. An die Seitenwand 5 schliesst sich seitlich die Ausnehmung 7 für den Schneidmesserhalter an, die parallel zu der Ausnehmung 2 verläuft und deren Boden 8 und somit die Ausnehmung 7 selbst der Breite des Schneidmesserhalters entspricht, der unten noch näher beschrieben wird. Die Seitenwand 9 der Ausnehmung 7 entspricht in ihrer Kontur der des Schneidmesserhalters und des Werkzeuges 1.

In Längsrichtung der Ausnehmung 7 weist deren Boden 8 zwei schmale Ausnehmungen oder Nuten 10, 11 auf, die in Längsrichtung der Ausnehmung 7 gegeneinander versetzt sind und deren

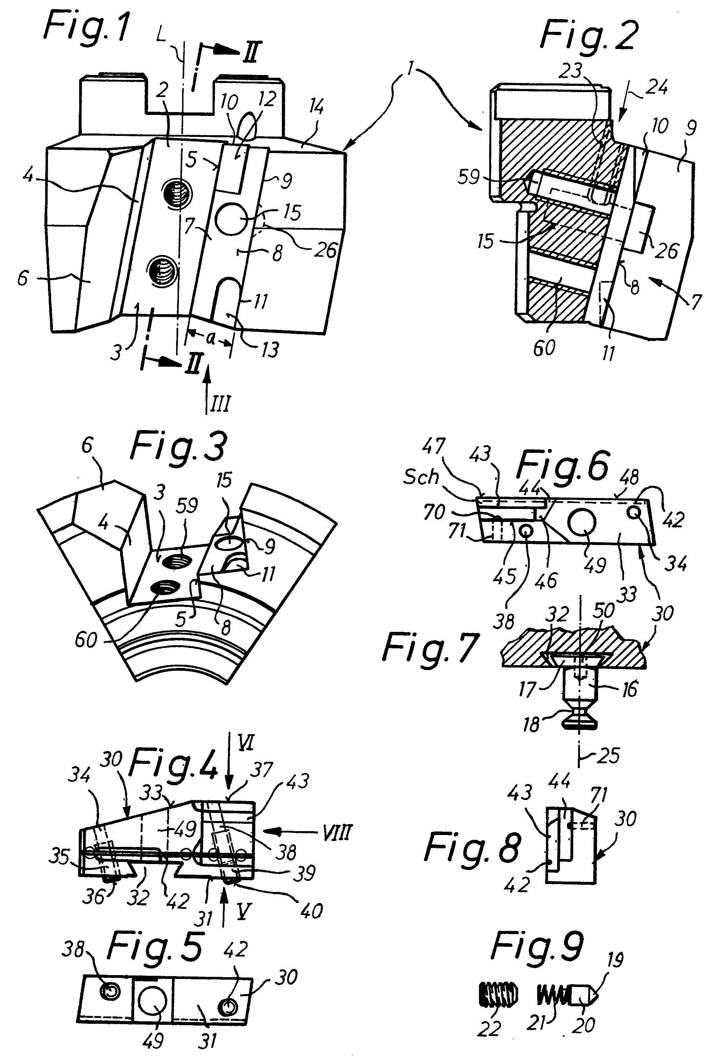

Boden 12, 13 geneigt zum Boden 8 und parallel zur Längsachse L des Werkzeuges verläuft. – Von dem zu dem Boden 3 der Ausnehmung 2 parallelen Boden 8 der Ausnehmung 7 aus erstreckt sich etwa in deren Mitte in radialer Richtung des Werkzeuges eine Sackbohrung 15, in die der Zapfen 16 eines kegelstumpfförmigen Exzenterkopfes 17 hineinragt. Dieser Zapfen trägt eine ringförmige Einschnürung 18, in die zum Zwecke der Fliehkraftsicherung des aus den Teilen 16, 17 gebildeten Exzenters der Fuss 19 des Sicherungsstiftes 20 eingreifen kann, der unter Wirkung der Feder steht, deren zweites Widerlager durch eine Madenschraube 22 gebildet wird. Der Stift 20, die Feder 21 und die Madenschraube 22 sind in eine mit Gewinde versehene Bohrung 23 in Richtung des Pfeiles 24 (Fig. 2) in das Werkzeug 1 derart einschraubbar, dass der Exzenterkopf 17 um die Achse 25 des Zapfens 16 drehbar ist, die Madenschraube 22 jedoch in ihrer Lage gehalten wird. Um die Drehbewegung des kegelstumpfförmigen Exzenterkopfes 17 zu ermöglichen, kann die Seitenwand 9 mit einer Auswölbung 26 (Fig. 1 und 2) versehen sein. Durch die Ausbildung des Exzenterkopfes 17 und der ihn aufnehmenden Ausnehmung 32 des Schneidmesserhalters sowie durch den Sicherungsstift 21 wird eine zu der untenstehend noch näher beschriebenen Klemmsicherung des Schneidmessers Sch und des Schneidmesserhalters 30 zusätzliche Fliehkraftsicherung geschaffen.

Der zur Anwendung gelangende Schneidmesserhalter 30 weist die Unterseite 31 auf, von der aus ein schwalbenschwanzförmiger Einschnitt 32 ausgeht in den der kegelstumpfförmige Exzenterkopf 17 einzugreifen vermag. Der Einschnitt 32 besitzt gegenüber dem Exzenterkopf 17 Übermass, ohne dass hierdurch die Verstellbewegung des Schneidmesserhalters beeinträchtigt wird (Fig. 7). Von der abgeschrägten Oberseite 33 geht eine zu der Unterseite 31 und damit zu dem Boden 8 der Ausnehmung 7 geneigte Gewindebohrung 34 aus, in die eine Madenschraube 35 einschraubbar ist, deren Ende 36 aus dem Boden 31 herausragt (Fig. 4).– Von dem Oberseitenabschnitt 37 des Schneidmesserhalters 30 geht eine gleiche Bohrung 38 aus, deren Madenschraube 39 ebenfalls mit ihrem Fuss 40 aus dem Boden 31 hervorragt. Die Bohrungen 34, 38 liegen rechtwinklig zu den Böden 12, 13 der Nut bzw. Ausnehmung 11, 12 des Bodens 8 der Ausnehmung 7. Die Enden 36, 40 können sich daher in Richtung einer Normalen auf den genannten Böden abstützen, wenn die Madenschrauben aus ihren Bohrungen 34, 38 aus- und eingeschraubt werden. An dem Schneidmesserhalter 30 ist mit Hilfe einer in einem Schlitz eingelegten Blattfeder 42 das Halterstück 43 gehalten. Dieses ragt federnd in eine Ausnehmung 44 des Schneidmesserhalters, die von der Wand 45 sowie dem Boden 46 begrenzt wird. (Fig. 6). Die Ausnehmung entspricht in ihrer Grösse dem aufzunehmenden Schneidmesser Sch. Die Ausnehmung 44 sowie das Halterstück 43 sind derart bemessen, dass dessen Aussenseite 47 mit der Wand 48 des Schneidmesserhalters 30 abschneidet, von dessen abgeschrägter Oberseite 33 eine Bohrung 49 ausgeht, durch die ein geeignetes Werkzeug gesteckt werden kann, dessen Kopf in die Mehrkantausnehmung 50 des Exzenters 17 gesteckt werden kann (Fig. 7), um hierdurch den Exzenter um die Achse 25 seines Zapfens 16 zu drehen.

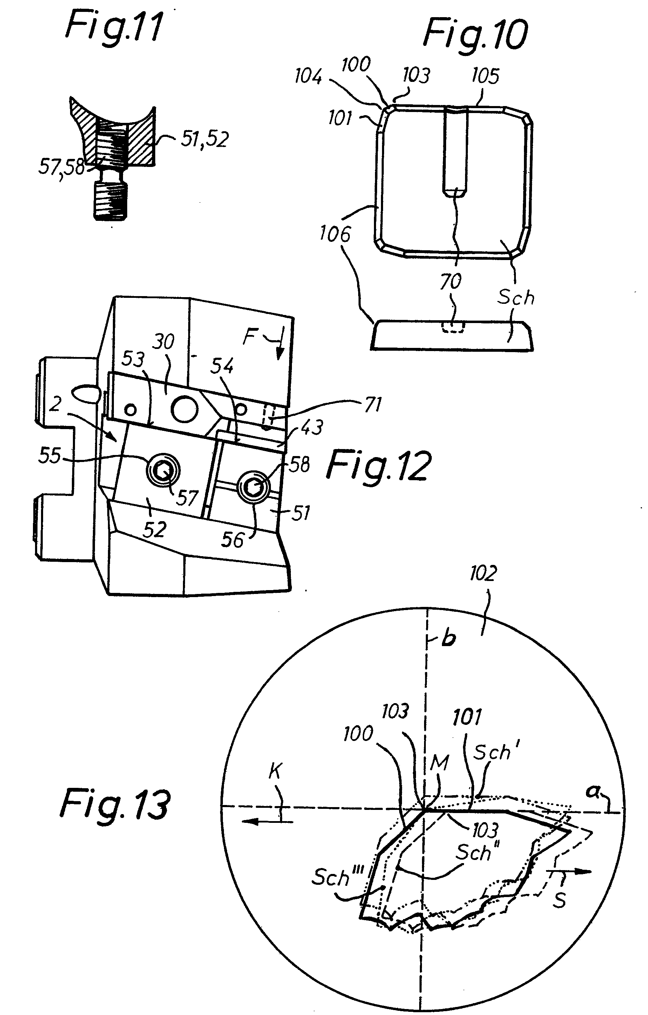

Der Schneidmesserhalter 30 wird durch zwei Klemmstücke 51, 52 gehalten (Fig. 11 und 12), die in der Ausnehmung 2 des Werkzeuges Aufnahme finden und deren Seitenflächen 53, 54 gegen die Seitenwand des Schneidmesserhalters 30 und gegen das Haltestück 43 klemmend anliegen und die beiden genannten Teile in ihrer Lage festhalten. Hierzu sind die beiden Klemmstücke 51, 52 mit einer Gewindebohrung 55, 56 versehen, durch die in eine mit gegenläufigen Gewinden versehene Innenmehrkantschraube 57, 58 ragt, die mit ihrem zweiten Gewinde in Bohrungen 59, 60 einschraubbar ist, die von dem Boden 2 der Ausnehmung 3 des Werkzeuges radial einwärts gerichtet sind.

Das Schneidmesser Sch besitzt als Einschneidmesser eine Nut 70, die sich über einen Teil des Schneidmessers erstreckt und in die der Kopf eines Stiftes 71 ragt, der in dem Halter 30 steckt.

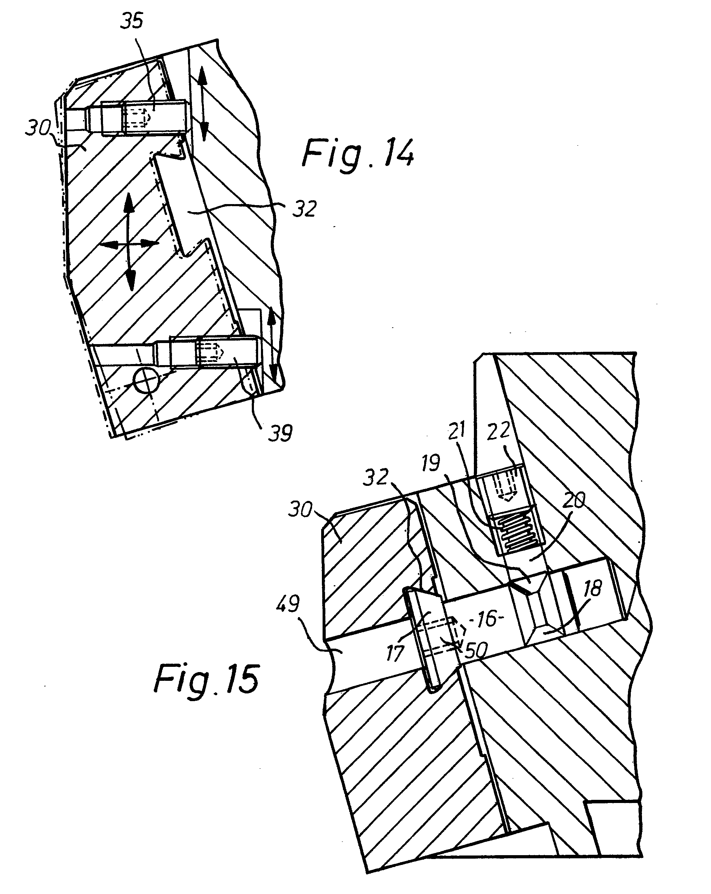

Anhand der Figuren 14 und 13 sind die Einstellmöglichkeiten des Schneidmessers Sch erläutert. Mit Hilfe der vorstehend beschriebenen Einstellmittel des Schneidmesserhalters 30 kann die Hauptschneide 100 und die Nebenschneide 101 eine bestimmte Lage gegenüber den Achsen a, b des Werkzeuges gegeben werden. Diese Lage kann auf dem, in Fig. 13 wiedergegebenen Schirm 102 eines Durchlicht-Projektors dargestellt werden. Hierbei wird die Eckkante 103 zwischen Haupt- und Nebenschneide zur Orientierung gegenüber dem Fadenkreuz M verwendet.– In strichpunktierter Lage Sch' des Schneidmessers ist diese Eckkante 103 axial gegenüber dem Fadenkreuz M versetzt. Durch Betätigung des Exzenterkopfes 17 kann die in Fig. 13 in ausgezogener Linie dargestellte Lage Sch des Schneidmessers erreicht werden.

In der Lage Sch'' ist die Eckkante 103 in Richtung des Pfeiles S gegenüber dem Fadenkreuz M versetzt. Durch entsprechende Betätigung der beiden, beidseits der Mittelebene des Schneidmesserhalters 30 angeordneten Schrauben 35, 39 kann der Schneidmesserhalter 30 derart radial in Richtung des Pfeiles K verstellt werden, dass die Eckkante 103 wiederum auf Höhe des Fadenkreuzes M liegt und das Schneidmesser die Stellung Sch in ausgezogener Linie in Fig. 13 erhält.

Aus den wiedergegebenen Stellungen Sch, Sch' und Sch'' kann das Schneidmesser auch in die zu den Achsen a, b des Fadenkreuzes geneigte Lage Sch''' dadurch gebracht werden, dass der Exzenterkopf 17 zur Verstellung in Richtung der Achse B betätigt wird, die beiden Schrauben 35, 39 zunächst gemeinsam die radiale Lage in Richtung des Pfeiles K bestimmen, dann aber eine der Schrauben oder aber beide Schrauben unabhängig voneinander so verstellt werden, dass das Schneidmesser seine geneigte Lage Sch''' erhält.

## Patentansprüche

1. Fräswerkzeug mit an seinem Umfang in radialen oder ungefähr radialen, zur Werkzeuglängsachse (L) geneigten Ausnehmungen (2) mittels Klemmstücke (51, 52) gehaltenen Schneidmesserhaltern (30), die axial sowie durch parallel zueinander angeordnete Stellschrauben (35, 39) radial einstellbar und um eine senkrecht zur Schneidmesserhalterebene gelegene Achse kippbar sind, dadurch gekennzeichnet, dass jeder Schneidmesserhalter (30) durch einen zwischen den parallelen Stellschrauben (35, 39) angeordneten Exzenter (16, 17, 18) mit einem in das Werkzeug (1) ragenden Fuss (16) und parallel zum Schneidmesserhalter (30) gelegenen Sicherungsstift (20) gehalten ist, wobei der den jeweiligen Exzenterkopf (17) aufnehmende Einschnitt (32) an der Unterseite des Schneidmesserhalters (30) Übermass gegenüber dem Exzenterkopf (17) hat.

2. Fräswerkzeug nach Anspruch 1, dadurch gekennzeichnet, dass der Exzenterkopf (17) kegelstumpfförmig ausgebildet ist und jeder den Exzenterkopf (17) aufnehmende Einschnitt (32) des Schneidmesserhalters (2) im Querschnitt schwalbenschwanzförmig ausgebildet ist.

3. Fräswerkzeug nach Anspruch 1 und 2, dadurch gekennzeichnet, dass jeder Sicherungsstift (20) federbelastet ist und durch eine Schraube (22) in seiner rechtwinklig zu der Exzenterachse verlaufenden Aufnahmebohrung in dem Werkzeug (1) gehalten ist.

4. Fräswerkzeug nach Anspruch 1, dadurch gekennzeichnet, dass die Stellschrauben (35, 39) sich senkrecht auf gegenüber dem Ausnehmungsboden (8) geneigten und parallel zur Werkzeuglängsachse (L) verlaufenden Nutenböden (12, 13) abstützen.

## Claims

1. A milling tool comprising cutting insert holders (30) which are held in radial or approximately radial recesses (2) inclined in relation to the longitudinal axis (L) of the tool by means of clamping members (51 and 52) which are able to be adjusted axially and adjusted radially by set screws (35 and 39) placed parallel to each other and are able to be tilted around an axis that is perpendicular to the cutting insert holder plane characterized in that each cutting insert holder (30) is held in place by an eccentric (16, 17 and 18) placed between the parallel set screws (35 and 39) and with a foot (16) projecting into the tool (1) and with a retaining pin (20) placed parallel to the cutting insert holder (30), and the cutout (32) receiving the respective eccentric head (17) on the lower side of the cutting insert holder (30) is oversize in relation to the eccentric head (17).

2. The milling tool as claimed in claim 1 characterized in that the eccentric head (17) is designed to be frusto-conical and each cutout (32) receiving the eccentric head (17) of the cutting insert holder (2) is dovetailed in cross section.

3. The milling tool as claimed in claims 1 and 2 characterized in that each retaining pin (20) is spring loaded and is held by a screw (22) in the hole therefor, that is perpendicular to the eccentric axis, in the tool (1).

4. The milling tool as claimed in claim 1 characterized in that the set screws (35 and 39) are located perpendicularly on groove bottoms (12 and 13) that are inclined in relation to the bottom (8) of the recess and are parallel to the longitudinal axis (L) of the tool.

## Revendications

1. Outil de fraisage comportant à sa périphérie des porte-lames (30) qui sont maintenus au moyen de pièces de serrage (51, 52) dans des évidements (2) orientés dans le sens radial ou presque et inclinés par rapport à l'axe longitudinal (L) de l'outil et qui peuvent être réglés dans le sens radial par des vis de serrage (35, 39) parallèles les unes aux autres et peuvent pivoter autour d'un axe perpendiculaire au plan des porte-lames, caractérisé en ce que chaque porte-lames (30) est maintenu par un excentrique (16, 17, 18) placé entre les vis de réglage parallèles (35, 39) associé à une cheville de sécurité (20) parallèle au porte-lames (30) et comportant un talon (16) pénétrant dans l'outil (1), l'évidement (32) ménagé à la surface inférieure du porte-lames (30) pour recevoir la tête d'excentrique (17) ayant une dimension plus grande que la tête d'exentrique (17).

2. Outil de fraisage selon la revendication 1, caractérisé en ce que la tête de fraisage (17) a une forme tronconique et que chacun des évidements (32) de porte-lames (2) qui reçoivent une tête d'excentrique (17) a, en coupe, une forme en queue d'aronde.

3. Outil de fraisage selon l'une des revendications 1 ou 2, caractérisé en ce que chaque cheville de sécurité (20) est soumise à une force élastique et est maintenue dans l'outil (1) par une vis (22) dans l'alésage qui la reçoit et est orienté perpendiculairement à l'axe de l'excentrique.

4. Outil de fraisage selon la revendication 1, caractérisé en ce que les vis de réglage (35, 39) prennent appui perpendiculairement sur des fonds de rainures (12, 13) inclinés par rapport au fond (8) des évidements et parallèles à l'axe longitudinal (L) de l'outil.

Fig.1

Fig.2

Fig.3

Fig.4

Fig.5

Fig.6

Fig.7

Fig.8

Fig.9

**Fig.11**

**Fig.10**

51,52

57,58

104 100 103 105
101
106
70
Sch

**Fig.12**

30
53 54
F
2 71
43
55 58
57 51
52 56

**Fig.13**

102
b
103 101
100 M Sch'
K a
103
Sch''
Sch'''
S

7

Fig.14

Fig.15